# EUROPÄISCHE PATENTSCHRIFT

(11) **EP 3 459 331 B1**
(45) Veröffentlichungstag und Bekanntmachung des Hinweises auf die Patenterteilung: **08.12.2021**
(21) Anmeldenummer: 18183288.2
(22) Anmeldetag: 13.07.2018
(51) Int. Cl.: A01B 67/00

(54) **LANDWIRTSCHAFTLICHE ARBEITSMASCHINE**
AGRICULTURAL MACHINE
ENGIN AGRICOLE

(30) Priorität: 25.09.2017 DE 102017122175
(43) Veröffentlichungstag der Anmeldung: 27.03.2019
(73) Patentinhaber: CLAAS Tractor S.A.S., 78141 Vélizy-Villacoublay Cedex (FR)
(72) Erfinder: Fedde, Thomas, 33129 Delbrück (DE); Angas, Klaus, 33415 Verl (DE)
(74) Vertreter: CLAAS Gruppe

(56) Entgegenhaltungen:
- EP-A2- 0 901 928
- EP-A2- 2 057 881
- EP-A2- 2 251 549
- CH-A1- 706 519

## Beschreibung

Die vorliegende Erfindung betrifft eine landwirtschaftliche Arbeitsmaschine, insbesondere einen Traktor, gemäß dem Oberbegriff von Anspruch 1.

Grundsätzlich sind verschiedene landwirtschaftliche Arbeitsmaschinen aus dem Stand der Technik bekannt. Dies können landwirtschaftliche Zugmaschinen, wie beispielsweise Traktoren, oder landwirtschaftliche Erntemaschinen, wie beispielsweise Mähdrescher oder Feldhäcksler, sein. Diese weisen mehrere Arbeitsorgane und/oder Anbaugeräte zur Durchführung oder Unterstützung landwirtschaftlicher Arbeit auf. Verschiedene der Arbeitsorgane und/oder Anbaugeräte werden hydraulisch betätigt bzw. betrieben. Hydraulisch betätigbare Arbeitsorgane sind beispielsweise die Lenkeinrichtung der landwirtschaftlichen Arbeitsmaschine oder eine Hubeinrichtung für ein vorderes oder hinteres Anbaugerät, beispielsweise einen Pflug, um nur einige Beispiele zu nennen. Diese hydraulisch betätigbaren Leistungsverbraucher werden über eine Hydraulikpumpe mit dem notwendigen hydraulischen Druck versorgt. Üblicherweise ist dabei einem oder mehreren dieser Leistungsverbraucher eine eigene Hydraulikpumpe zugeordnet, der jeweils ein Teil der Antriebsleistung, die von der Antriebseinheit erzeugt wird, zugeführt wird.

Mit der Antriebseinheit ist hier der Hauptantrieb der landwirtschaftlichen Arbeitsmaschine gemeint, der auch dazu dient, den Fahrantrieb (Antriebsachse mit Antriebsrädern) anzutreiben. Die Antriebseinheit weist dazu einen Antriebsmotor auf, bei dem es sich regelmäßig um eine Verbrennungskraftmaschine handelt.

Die Fördermenge der genannten Hydraulikpumpen ist üblicherweise unmittelbar mit der Drehzahl der Antriebseinheit (Motordrehzahl) gekoppelt. Die Drehzahl der Antriebseinheit ist wiederum abhängig von der Leistungsanforderung des Fahrantriebs. Ein Kontrollsystem zur Steuerung einer von der jeweiligen Hydraulikpumpe abgegebenen Hydraulikölmenge unter Berücksichtigung der Motordrehzahl ist beispielsweise in der WO 2016/071411 A1 offenbart.

Die EP 0901 928 A1 offenbart eine selbstfahrende Arbeitsmaschine mit einer Regelung der Ausgangsleistung des Antriebsmotors in Abhängigkeit von jeweils auf die Nebenabtriebe und jeweils auf das Getriebe leistungsbegrenzend wirkenden Größen. Eine Steuerung für ein Antriebssystem einer Arbeitsmaschine mit einer Verbrennungskraftmaschine mit mindestens einem Abtrieb ist aus der CH 706 519 A1 bekannt, wobei über die Verbrennungskraftmaschine ein Sekundärantrieb des Antriebssystems angetrieben wird, welcher eine Stellgröße aufweist, über deren Einstellung die Leistung des Sekundärantriebs einstellbar ist.

Aufgrund der Vielzahl an hydraulischen Funktionen kann es in bestimmten Situationen zu einer Unterversorgung einzelner hydraulischer Leistungsverbraucher mit Hydrauliköl kommen, wenn die hydraulischen Leistungsverbraucher in Summe mehr Hydrauliköl benötigen als die Hydraulikpumpen liefern können. Dies kann zu Störungen im Betrieb der landwirtschaftlichen Arbeitsmaschine führen, die auch sicherheitskritisch sein können, da beispielsweise die Lenkeinrichtung üblicherweise hydraulisch arbeitet. Wird aber von einem Kontrollsystem, im Weiteren Hydraulikregler genannt, zur Vermeidung einer solchen Unterversorgung mehr Antriebsleistung angefordert, besteht das Risiko, dass dem Fahrantrieb in bestimmten Fahrsituationen nicht genügend Antriebsleistung zur Verfügung gestellt werden kann. Dies kann letztlich zu einer Verringerung der Effizienz bei der Durchführung eines landwirtschaftlichen Arbeitsauftrags führen.

Der Erfindung liegt das Problem zugrunde, eine landwirtschaftliche Arbeitsmaschine derart auszugestalten und weiterzubilden, dass eine möglichst hohe Effizienz bei der Ausführung eines landwirtschaftlichen Arbeitsauftrags gewährleistet wird.

Das obige Problem wird bei einer landwirtschaftlichen Arbeitsmaschine gemäß dem Oberbegriff von Anspruch 1 durch die Merkmale des kennzeichnenden Teils von Anspruch 1 gelöst.

Wesentlich ist die grundsätzliche Überlegung, dass bei der Regelung der benötigten Ölmengen der Hydraulikpumpen nicht nur die Leistungsanforderungen der jeweiligen hydraulisch betätigbaren Leistungsverbraucher berücksichtigt werden, sondern auch die Leistungsanforderung des Fahrantriebs. Die jeweiligen Leistungsanforderungen werden dabei insbesondere kontinuierlich oder diskontinuierlich, vorzugsweise in regelmäßigen Abständen, ermittelt und von einem Fahrerassistenzsystem der landwirtschaftlichen Arbeitsmaschine, das insbesondere einen Hydraulikregler und/oder einen Fahrregler aufweist, herangezogen, um die von der Antriebseinheit bzw. dem Antriebsmotor erzeugte Antriebsleistung automatisch zu regeln. Die Antriebsleistung und insbesondere die Motordrehzahl wird dabei im Bedarfsfall so erhöht, dass bei einem Mehrbedarf an hydraulischer Leistung dies keine oder zumindest keine nennenswerten Auswirkungen auf die Funktion des Fahrantriebs hat. Umgekehrt erlaubt die automatische Regelung der Antriebsleistung aber auch, dass im Falle eines Mehrbedarfs an Antriebsleistung für den Fahrantrieb dies keine oder keine nennenswerten Auswirkungen auf die Funktion des oder der hydraulischen Leistungsverbraucher hat.

Vorschlagsgemäß ist das Fahrerassistenzsystem nun konfiguriert, eine automatische Regelung der Antriebsleistung sowohl basierend auf einer ermittelten benötigten Leistung und/oder Auslastung des ersten Leistungsverbrauchers in Form des Fahrantriebs als auch basierend auf einer ermittelten benötigten hydraulischen Leistung und/oder einer hydraulischen Auslastung mindestens eines weiteren Leistungsverbrauchers in Form eines hydraulisch betätigbaren Arbeitsorgans und/oder Anbaugeräts durchzuführen.

Zum Zwecke der automatischen Regelung der Antriebsleistung weist das Fahrerassistenzsystem nach der Ausgestaltung gemäß Anspruch 2 einen Fahrregler auf, der konfiguriert ist, die Motordrehzahl, gegebenenfalls auch die Getriebeübersetzung, in Abhängigkeit einer Leistungsanforderung des Fahrantriebs einzustellen.

Vorschlagsgemäß ist ein Hydraulikregler vorgesehen, der konfiguriert ist, die Pumpendrehzahl der dem bzw. den jeweiligen hydraulischen Leistungsverbraucher(n) zugeordneten Hydraulikpumpe in Abhängigkeit einer Leistungsanforderung des bzw. der jeweiligen Leistungsverbraucher(s) einzustellen.

Hierbei sind der Fahrregler und der Hydraulikregler konfiguriert, miteinander zu kommunizieren, das heißt Daten des Hydraulikreglers werden an den Fahrregler übertragen und/oder Daten des Fahrreglers werden an den Hydraulikregler übertragen.

Besonders bevorzugt kann das Fahrerassistenzsystem mit dem Fahrregler und dem Hydraulikregler in unterschiedlichen Regelungs-Modi arbeiten bzw. betrieben werden, die durch unterschiedliche Priorisierungen der Verteilung der erzeugten Antriebsleistung gekennzeichnet sind.

So kann in einem Hydraulikregler-Modus des Fahrerassistenzsystems das Hydrauliksystem (hydraulisch betätigbare Arbeitsorgane und/oder Anbaugeräte bzw. zugeordnete Hydraulikpumpen) bzw. die Leistungsanforderung der Hydraulikpumpe oder Hydraulikpumpen gegenüber dem Fahrantrieb eine höhere Priorität haben, so dass eine Unterversorgung des mindestens einen hydraulischen Leistungsverbrauchers sicher vermieden werden kann. Mögliche Ausgestaltungen des Fahrerassistenzsystems mit einem Hydraulikregler-Modus sind in den Ansprüchen 3 bis 6 definiert.

Das Fahrerassistenzsystem kann auch einen Fahrregler-Modus aufweisen, in dem dann der Fahrregler den Fahrantrieb bzw. die Leistungsanforderung des Fahrantriebs priorisiert, um eine Unterversorgung des Fahrantriebs zu vermeiden. Ausgestaltungen des Fahrerassistenzsystems mit einem Fahrregler-Modus sind in den Ansprüchen 7 bis 10 definiert.

Nach der Ausgestaltung gemäß Anspruch 11 kann das Fahrerassistenzsystem auch einen manuellen Modus aufweisen, in dem die Regelung der Antriebsleistung bedienerseitig ohne Beeinflussung durch den Fahrregler oder den Hydraulikregler erfolgen kann.

Die einzelnen Regelungs-Modi, insbesondere der Hydraulikregler-Modus, der Fahrregler-Modus und/oder der manuelle Modus, werden insbesondere bedienerseitig eingestellt, können grundsätzlich aber auch automatisch systemseitig eingestellt werden (Anspruch 12). So ist es beispielsweise denkbar, dass der Hydraulikregler-Modus automatisch beim Stillstand der landwirtschaftlichen Arbeitsmaschine eingestellt wird und/oder der Fahrregler-Modus automatisch beim Fahrzustand eingestellt wird.

Die Verteilung der von der Antriebseinheit erzeugten Antriebsleistung erfolgt gemäß Anspruch 13 bevorzugt über ein Verteilergetriebe.

Im Folgenden wird die Erfindung anhand einer lediglich Ausführungsbeispiele darstellenden Zeichnung näher erläutert. In der Zeichnung zeigt
- Fig. 1: eine schematische Ansicht einer vorschlagsgemäßen landwirtschaftlichen Arbeitsmaschine in Form eines Traktors und
- Fig. 2: eine schematische Darstellung verschiedener Regelungs-Modi eines Fahrerassistenzsystems der landwirtschaftlichen Arbeitsmaschine aus Fig. 1.

Die vorschlagsgemäße Lösung lässt sich auf einen weiten Bereich landwirtschaftlicher Arbeitsmaschinen anwenden. Dazu gehören Zugmaschinen, insbesondere Traktoren, und Erntemaschinen, insbesondere Mähdrescher, Feldhäcksler oder dergleichen. Bei dem dargestellten und insoweit bevorzugten Ausführungsbeispiel handelt es sich bei der landwirtschaftlichen Arbeitsmaschine 1 um einen Traktor, der in an sich üblicher Weise eine Antriebseinheit 2 mit einem Antriebsmotor 3, beispielsweise einer Verbrennungskraftmaschine, sowie einen davon mit Antriebsleistung versorgten Fahrantrieb 4 als ersten Leistungsverbraucher und mehrere hydraulisch betätigbare Arbeitsorgane 6, 7 und/oder Anbaugeräte 13 als weitere Leistungsverbraucher 8 aufweist. Hydraulisch betätigbare Arbeitsorgane sind beispielsweise die Lenkeinrichtung 6 oder die vordere und hintere Hubeinrichtung 7. Hydraulisch betätigbare Anbaugeräte sind beispielsweise Heuwender, Mähwerke, Ballenpressen oder dergleichen. Letztere sind bevorzugt elektrisch und hydraulisch über Power Beyond-Kupplungen mit der Arbeitsmaschine 1 gekoppelt.

Der Fahrantrieb 4 weist hier und vorzugsweise zwei Antriebsachsen 9 auf, die über ein dem Antriebsmotor 3 nachgeschaltetes Getriebe 10 mit einem ersten Teil der vom Antriebsmotor 3 erzeugten Antriebsleistung versorgt werden, um den Vortrieb der landwirtschaftlichen Arbeitsmaschine 1 zu bewirken.

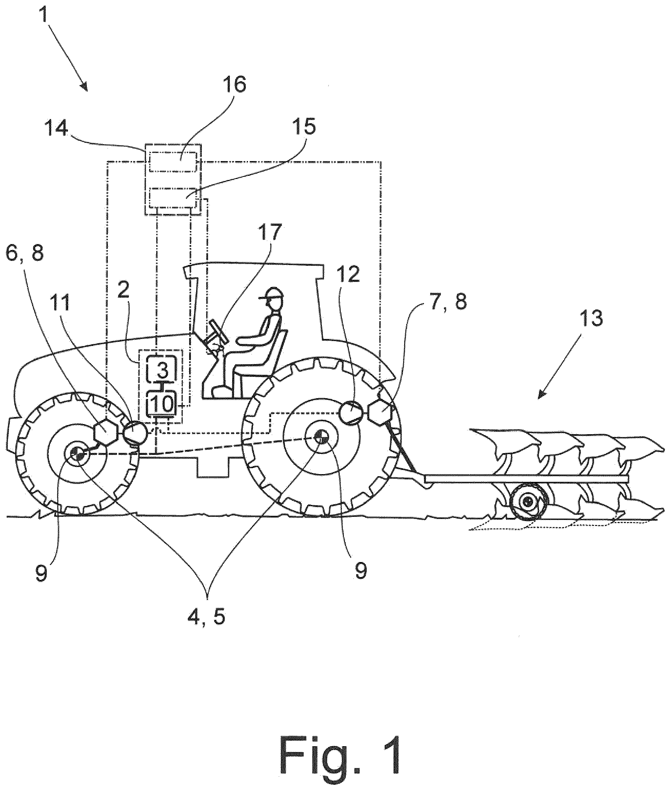

Einem oder mehreren der weiteren Leistungsverbraucher 8 ist jeweils eine Hydraulikpumpe 11, 12 zugeordnet. Über das Getriebe 10, das hier und vorzugsweise als Verteilergetriebe ausgeführt ist, wird ein weiterer Teil der vom Antriebsmotor 3 erzeugten Antriebsleistung an die dem bzw. den jeweiligen Arbeitsorgan(en) 6, 7 zugeordnete Hydraulikpumpe 11, 12 übertragen, um das bzw. die jeweilige(n) Arbeitsorgan(e) 6, 7 zu betätigen. Lediglich beispielhaft ist hier jeweils genau eine Hydraulikpumpe 11, 12 genau einem der weiteren Leistungsverbraucher 8 zugeordnet. Hier sind beispielsweise in Fig. 1 als hydraulisch betätigbare Arbeitsorgane 6, 7 eine Lenkeinrichtung 6 zum Lenken der landwirtschaftlichen Arbeitsmaschine 1 und eine Hubeinrichtung 7 zum Anheben und Absenken eines Anbaugeräts 13, hier beispielsweise eines Pflugs, vorgesehen, die jeweils über eine eigene Hydraulikpumpe 11, 12 betrieben werden.

Die landwirtschaftliche Arbeitsmaschine 1 weist ferner ein Fahrerassistenzsystem 14 auf, das hier und vorzugsweise einen Fahrregler 15 aufweist, der konfiguriert ist, die Motordrehzahl und gegebenenfalls die Übersetzung des Getriebes 10 in Abhängigkeit einer Leistungsanforderung des Fahrantriebs 4 einzustellen, sowie einen Hydraulikregler 16, der konfiguriert ist, die Pumpendrehzahl der dem jeweiligen weiteren Leistungsverbraucher 8, hier der Lenkeinrichtung 6 und der Hubeinrichtung 7, zugeordneten Hydraulikpumpe 11, 12 in Abhängigkeit einer Leistungsanforderung des jeweiligen Leistungsverbrauchers 8 einzustellen.

Wesentlich bei der vorschlagsmäßen landwirtschaftlichen Arbeitsmaschine 1 ist nun, das über das Fahrerassistenzsystem 14 eine automatische Regelung der Antriebsleistung, die vom Antriebsmotor 3 erzeugt wird, basierend auf einer ermittelten benötigten Leistung und/oder Auslastung des ersten Leistungsverbrauchers 5 in Form des Fahrantriebs 4 sowie außerdem basierend auf einer ermittelten benötigten hydraulischen Leistung und/oder hydraulischen Auslastung des mindestens einen Leistungsverbrauchers 8 in Form der hydraulisch betätigbaren Arbeitsorgane 6,7 durchführbar ist. Auf diese Weise kann, insbesondere abhängig von einem eingestellten speziellen Regelungs-Modus, eine Unterversorgung des Fahrantriebs 4 mit mechanischer und/oder hydraulischer Leistung und/oder eine Unterversorgung der hydraulisch betätigbaren Arbeitsorgane 6,7 mit Hydrauliköl verhindert werden. Störungen im Betrieb der landwirtschaftlichen Arbeitsmaschine 1 können dadurch vermieden werden und die landwirtschaftliche Arbeit kann effizienter ausgeführt werden.

Der Hydraulikregler 16 ist dabei bevorzugt in der Lage, in Anhängigkeit eines ermittelten erforderlichen Volumenstroms eine minimale Anforderung an die Motordrehzahl zu berechnen und entsprechende Daten an den Fahrregler 15 zu übertragen, der die Motordrehzahl und/oder die Getriebeübersetzung entsprechend anpasst. Die aktuell benötigte hydraulische Leistung bzw. Menge an Hydrauliköl kann anhand der Anzahl an aktivierten hydraulischen Leistungsverbrauchern 8 kontinuierlich oder diskontinuierlich ermittelt werden und so ein entsprechender Ist-Wert für die hydraulische Leistung bzw. die Ölmenge, und somit die hydraulische Auslastung, bestimmt werden. Der jeweilige Ist-Wert kann dann mit der von den hydraulischen Leistungsverbrauchern 8 insgesamt angeforderten hydraulischen Leistung bzw. der angeforderten Fördermenge (Soll-Wert) verglichen werden. Entsprechende Soll-Werte lassen sich beispielsweise durch ermittelte Sensorwerte von die landwirtschaftliche Arbeitsmaschine 1 und/oder den durchgeführten landwirtschaftlichen Arbeitsauftrag überwachenden Sensoren ableiten. Weiterhin kann anhand der Motordrehzahl der Antriebseinheit 2 und den Parametern der Hydraulikpumpe bzw. der Hydraulikpumpen ein maximal förderbarerer Volumenstrom an Hydraulikflüssigkeit ermittelt werden. Bei einer drohenden Unterversorgung kann somit zunächst einmal die Antriebseinheit auf einen Maximalwert gebracht werden, um die maximal förderbare Menge an Hydrauliköl zu fördern. Gleichzeitig kann auch die aktuell benötigte Leistung des Fahrantriebs 4, beispielsweise über Drehzahl- und/oder Drehmomentsensoren, kontinuierlich oder diskontinuierlich ermittelt und so ein entsprechender Ist-Wert für die Fahrantriebsleistung bestimmt werden, wobei auch dieser Ist-Wert mit entsprechend sensorisch abgeleiteten Soll-Werten verglichen werden kann. Auch dieses Vergleichsergebnis kann dann bei der Bestimmung des Maximalwerts, auf den die Antriebseinheit zu bringen ist, berücksichtigt werden.

Bei der vorschlagsgemäßen Regelung der Antriebsleistung, bei der der Fahrregler 15 und der Hydraulikregler 16 die Regelung gemeinsam durchführen, können in einer bevorzugten Ausgestaltung bedienerseitig oder systemseitig Priorisierungen des einen oder anderen Systems, das heißt des Fahrantriebs 4 einerseits oder des die Arbeitsorgane 6,7 aufweisenden Hydrauliksystems andererseits, vorgenommen werden. So ist bevorzugt für jede Priorisierung ein eigener Regelungs-Modus einstellbar.

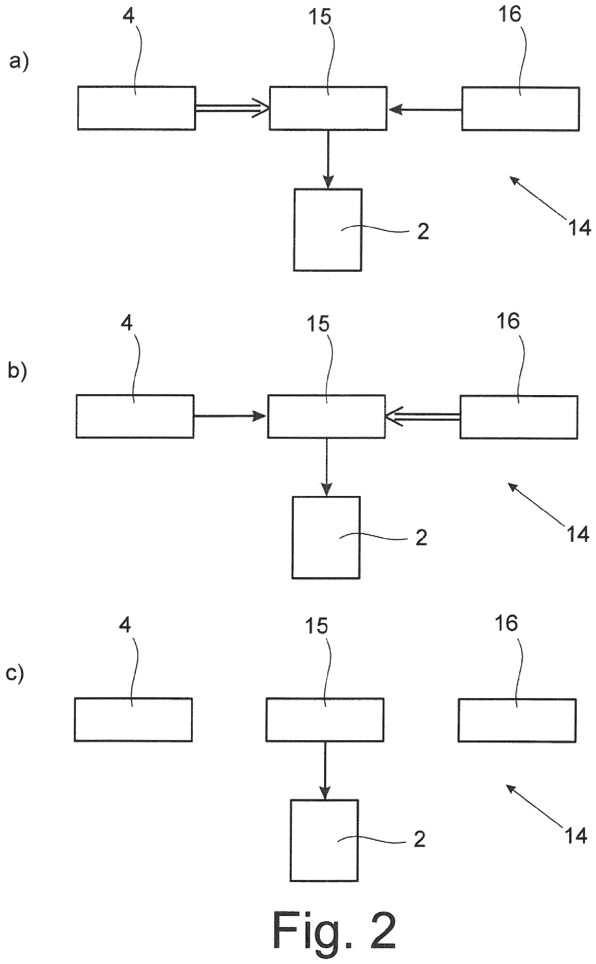

Eine Priorisierung des Fahrantriebs 4 bzw. der Leistungsanforderung des Fahrantriebs 4 erfolgt beispielsweise in einem Fahrregler-Modus, das heißt einem Modus, in dem der Fahrregler 15 gegenüber dem Hydraulikregler 16 einen "Master" bildet (Fig. 2a).

Im Fahrregler-Modus stellt der Fahrregler 15 die Motordrehzahl in Anhängigkeit einer vom Fahrantrieb 4 geforderten Leistung ein, wobei der vom Hydraulikregler 16 insgesamt geforderte Volumenstrom und/oder die vom Hydraulikregler 16 insgesamt geforderte Pumpenleistung nicht oder nur mit untergeordneter Priorität berücksichtigt wird (in Fig. 2a ist die Priorisierung durch einen breiteren Pfeil zwischen dem Fahrantrieb 4 und dem Fahrregler 15 symbolisiert). Insbesondere ist dabei vorgesehen, dass im Fahrregler-Modus der Fahrregler 15 die Motordrehzahl in Abhängigkeit einer vom Fahrantrieb 4 geforderten Leistung erhöht, sobald die Motordrehzahl des Antriebsmotors 3 nicht ausreicht, die vom Fahrantrieb 4 geforderte Leistung zu erzeugen. Entsprechend kann auch vorgesehen sein, dass der Fahrregler 15 die Motordrehzahl in Abhängigkeit einer vom Fahrantrieb 4 geforderten Leistung senkt, sobald die Motordrehzahl des Antriebsmotors 3 höher als notwendig ist, um die vom Fahrantrieb 4 geforderte Leistung zu erzeugen.

Über einen optionalen Motordrehzahl-Stellhebel 17, der hier und vorzugsweise ein mechanischer Stellhebel ist, aber grundsätzlich auch ein virtueller Stellhebel auf einem Touchscreen sein kann, ist bedienerseitig im Fahrregler-Modus eine Mindestmotordrehzahl einstellbar. Die eingestellte Motordrehzahl wird dann im Betrieb der landwirtschaftlichen Arbeitsmaschine 1 während der automatischen Regelung der Antriebsleistung nicht unterschritten, kann im Bedarfsfall aber erhöht werden, sobald die Motordrehzahl des Antriebsmotors 3 nicht mehr ausreicht, die vom Fahrantrieb 4 geforderte Leistung zu erzeugen. Die über den Motordrehzahl-Stellhebel 17 einstellbare Mindestmotordrehzahl ist insbesondere die Motordrehzahl, die mindestens erforderlich ist, um einen einwandfreien Betrieb der Hydraulikpumpen 11,12 zu gewährleisten, ohne dass hier eine Unterversorgung droht.

Besonders bevorzugt kann im Fahrregler-Modus bedienerseitig zwischen mindestens zwei gespeicherten Motordrehzahlen, beispielsweise über entsprechende mechanische oder virtuelle Wahltasten, gewählt werden, wobei die jeweils gewählte Motordrehzahl von dem Fahrregler 15 durch automatische Anpassung der Getriebeübersetzung des Getriebes 10 konstant gehalten oder zumindest nicht wesentlich unterschritten wird.

Ein weiterer Regelungsmodus, nämlich der Hydraulikregler-Modus, ist in Fig. 2b dargestellt. Im Hydraulikregler-Modus, in dem der Hydraulikregler 16 gegenüber dem Fahrregler 15 einen "Master" bildet, wird der Hydraulikregler 16 bzw. die Leistungsanforderung des Hydrauliksystems (hydraulisch betätigbare Arbeitsorgane 6,7 und/oder Anbaugeräte bzw. zugeordnete Hydraulikpumpen 11,12) priorisiert.

Hierbei stellt der Fahrregler 15 die Motordrehzahl in Anhängigkeit eines vom Hydraulikregler 16 insgesamt geforderten Volumenstroms und/oder einer vom Hydraulikregler 16 insgesamt geforderten Pumpenleistung ein, wobei die vom Fahrantrieb 4 geforderte Leistung nicht oder nur mit untergeordneter Priorität berücksichtigt wird (In Fig. 2b ist die Priorisierung durch einen breiteren Pfeil zwischen dem Hydraulikregler 16 und dem Fahrregler 15 symbolisiert).

Insbesondere ist im Hydraulikregler-Modus vorgesehen, dass der Fahrregler 15 die Motordrehzahl in Abhängigkeit eines vom Hydraulikregler 16 insgesamt geforderten Volumenstroms und/oder einer vom Hydraulikregler 16 insgesamt geforderten Pumpenleistung erhöht, sobald die Pumpendrehzahl der Hydraulikpumpe 11,12 oder mindestens einer der Hydraulikpumpen 11,12 nicht ausreicht, den geforderten Volumenstrom dieser Hydraulikpumpe 11,12 und/oder die geforderte Pumpenleistung dieser Hydraulikpumpe 11,12 zu erzeugen. Entsprechend kann auch vorgesehen sein, dass der Fahrregler 15 die Motordrehzahl in Abhängigkeit eines vom Hydraulikregler 16 insgesamt geforderten Volumenstroms und/oder einer vom Hydraulikregler 16 insgesamt geforderten Pumpenleistung senkt, sobald die Pumpendrehzahl der Hydraulikpumpe 11,12 oder mindestens einer der Hydraulikpumpen 11,12 höher als notwendig ist, um den geforderten Volumenstrom dieser Hydraulikpumpe 11,12 und/oder die geforderte Pumpenleistung dieser Hydraulikpumpe 11,12 zu erzeugen.

Alternativ oder zusätzlich kann auch vorgesehen sein, dass im Hydraulikregler-Modus der Fahrregler 15 die Motordrehzahl in Abhängigkeit eines vom Hydraulikregler 16 insgesamt geforderten Volumenstroms und/oder einer vom Hydraulikregler 16 insgesamt geforderten Pumpenleistung erhöht, sobald der Antriebsmotor 3 bei der aktuellen Motordrehzahl aufgrund einer Leistungsanforderung des Fahrantrieb 4 voll ausgelastet ist und bei dieser Motordrehzahl keine Leistungsreserve für den mindestens einen weiteren Leistungsverbraucher und/oder die zugeordnete Hydraulikpumpe 11,12 zur Verfügung steht. Entsprechend kann auch vorgesehen sein, dass der Fahrregler 15 die Motordrehzahl in Abhängigkeit eines vom Hydraulikregler 16 insgesamt geforderten Volumenstroms und/oder einer vom Hydraulikregler 16 insgesamt geforderten Pumpenleistung senkt, sobald der Antriebsmotor 3 bei der aktuellen Motordrehzahl aufgrund einer Leistungsanforderung des Fahrantriebs 4 nur zum Teil ausgelastet ist und bei dieser Motordrehzahl eine vorgegebene Leistungsreserve für den mindestens einen weiteren Leistungsverbraucher und/oder die zugeordnete Hydraulikpumpe 11,12 zur Verfügung steht.

Grundsätzlich ist es, zumindest im Hydraulikregler-Modus, auch denkbar, den verschiedenen hydraulischen Leistungsverbrauchern 8 bzw. zugeordneten Hydraulikpumpen 11, 12 unterschiedliche Prioritäten zuzuordnen, beispielsweise die Lenkeinrichtung 6 gegenüber allen anderen hydraulischen Leistungsverbrauchern zu priorisieren. Dies kann bedienerseitig und/oder systemseitig erfolgen.

Im Hydraulikregler-Modus erfolgt eine Veränderung der Motordrehzahl bedingt durch eine Leistungsanforderung des Hydraulikreglers 16 im Stillstand insbesondere schneller als im Fahrzustand der landwirtschaftlichen Arbeitsmaschine 1, da im Stillstand kein Einfluss der Motordrehzahl auf die Fahrgeschwindigkeit besteht. Befindet sich die landwirtschaftliche Arbeitsmaschine 1 dagegen im Fahrzustand, muss die Motordrehzahl mit abgestimmter verringerter Dynamik angepasst werden, so dass am insbesondere stufenlosen Getriebe 10 die Übersetzung synchron so verändert werden kann, dass die Fahrgeschwindigkeit der Arbeitsmaschine 1 nicht unerwünscht verändert wird bzw. konstant bleibt.

Schließlich ist, was in Fig. 2c schematisch dargestellt ist, auch denkbar, dass das Fahrerassistenzsystem 14 einen manuellen Modus aufweist, in dem die Motordrehzahl und/oder die Getriebeübersetzung des Getriebes 10 allein bedienerseitig einstellbar ist. Weder der Fahrregler 15 noch der Hydraulikregler 16 beeinflussen in diesem manuellen Modus die Motordrehzahl und/oder die Getriebeübersetzung (in Fig. 2c sind keine Verbindungslinien zwischen Fahrantrieb 4 und Fahrregler 15 bzw. zwischen Hydraulikregler 16 und Fahrregler 15 dargestellt, was symbolisiert, dass hier keine Beeinflussung des Fahrreglers 15 seitens des Fahrantriebs 4 oder Hydraulikreglers 16 erfolgt).

Zumindest der Fahrregler-Modus und/oder der Hydraulikregler-Modus kann systemseitig automatisch eingestellt werden. Der Hydraulikregler-Modus kann beispielsweise im Stillstand der landwirtschaftlichen Arbeitsmaschine 1 eingestellt werden, wenn der Fahrantrieb 4 keine oder zumindest keine nennenswerte Leistung benötigt. Sobald dann die landwirtschaftliche Arbeitsmaschine 1 im Fahrzustand ist, kann der Fahrregler-Modus automatisch eingestellt werden. Grundsätzlich ist es zusätzlich oder alternativ aber auch denkbar, die einzelnen Regelungs-Modi manuell einzustellen.

### Bezugszeichenliste

- 1: Landwirtschaftliche Arbeitsmaschine
- 2: Antriebseinheit
- 3: Antriebsmotor
- 4: Fahrantrieb
- 5: Erster Leistungsverbraucher
- 6: Hydraulisch betätigbares Arbeitsorgan
- 7: Hydraulisch betätigbares Arbeitsorgan
- 8: Weiterer Leistungsverbraucher
- 9: Antriebsachsen
- 10: Getriebe
- 11: Hydraulikpumpe
- 12: Hydraulikpumpe
- 13: Anbaugerät
- 14: Fahrerassistenzsystem
- 15: Fahrregler
- 16: Hydraulikregler
- 17: Motordrehzahl-Stellhebel

## Patentansprüche

1. Landwirtschaftliche Arbeitsmaschine, insbesondere Traktor, mit einer Antriebseinheit (2) umfassend mindestens einen Antriebsmotor (3) zur Erzeugung einer Antriebsleistung, mit einem ersten Leistungsverbraucher (5) in Form eines Fahrantriebs (4) und mindestens einem weiteren Leistungsverbraucher (8) in Form eines hydraulisch betätigbaren Arbeitsorgans (6, 7) und/oder Anbaugeräts (13) der landwirtschaftlichen Arbeitsmaschine (1),
wobei ein Fahrerassistenzsystem (14) der landwirtschaftlichen Arbeitsmaschine (1) konfiguriert ist, eine automatische Regelung der Antriebsleistung sowohl basierend auf einer ermittelten benötigten Leistung und/oder Auslastung des ersten Leistungsverbrauchers (5) als auch basierend auf einer ermittelten benötigten hydraulischen Leistung und/oder einer hydraulischen Auslastung des mindestens einen weiteren Leistungsverbrauchers (8) durchzuführen,
**dadurch gekennzeichnet,**
das Fahrerassistenzsystem (14) zur automatischen Regelung der Antriebsleistung einen Hydraulikregler (16) aufweist, der konfiguriert ist, die Pumpendrehzahl der jeweiligen Hydraulikpumpe (11, 12), die einem oder mehreren der weiteren Leistungsverbraucher (8) zugeordnet ist, in Abhängigkeit einer Leistungsanforderung des oder der jeweiligen weiteren Leistungsverbraucher(s) (8) einzustellen, wobei Fahrregler (15) und Hydraulikregler (16) konfiguriert sind, miteinander zu kommunizieren.

2. Landwirtschaftliche Arbeitsmaschine nach Anspruch 1, **dadurch gekennzeichnet, dass** das Fahrerassistenzsystem (14) zur automatischen Regelung der Antriebsleistung einen Fahrregler (15) aufweist, der konfiguriert ist, die Motordrehzahl in Abhängigkeit einer Leistungsanforderung des Fahrantriebs (4) einzustellen.

3. Landwirtschaftliche Arbeitsmaschine nach einem der vorhergehenden Ansprüche, **dadurch gekennzeichnet, dass** das Fahrerassistenzsystem (14) einen Hydraulikregler-Modus aufweist, in dem der Fahrregler (15) die Motordrehzahl in Abhängigkeit eines vom Hydraulikregler (16) insgesamt geforderten Volumenstroms und/oder einer vom Hydraulikregler (16) insgesamt geforderten Pumpenleistung einstellt.

4. Landwirtschaftliche Arbeitsmaschine nach einem der vorhergehenden Ansprüche, **dadurch gekennzeichnet, dass** im Hydraulikregler-Modus der Fahrregler (15) die Motordrehzahl in Abhängigkeit eines vom Hydraulikregler (16) insgesamt geforderten Volumenstroms und/oder einer vom Hydraulikregler (16) insgesamt geforderten Pumpenleistung erhöht, sobald die Pumpendrehzahl der Hydraulikpumpe (11, 12) oder mindestens einer der Hydraulikpumpen (11, 12) nicht ausreicht, den geforderten Volumenstrom dieser Hydraulikpumpe (11, 12) und/oder die geforderte Pumpenleistung dieser Hydraulikpumpe (11, 12) zu erzeugen, und/oder der Fahrregler (15) die Motordrehzahl in Abhängigkeit eines vom Hydraulikregler (16) insgesamt geforderten Volumenstroms und/oder einer vom Hydraulikregler (16) insgesamt geforderten Pumpenleistung senkt, sobald die Pumpendrehzahl der Hydraulikpumpe (11, 12) oder mindestens einer der Hydraulikpumpen (11, 12) höher als notwendig ist, um den geforderten Volumenstrom dieser Hydraulikpumpe (11, 12) und/oder die geforderte Pumpenleistung dieser Hydraulikpumpe (11, 12) zu erzeugen.

5. Landwirtschaftliche Arbeitsmaschine nach einem der vorhergehenden Ansprüche, **dadurch gekennzeichnet, dass** im Hydraulikregler-Modus der Fahrregler (15) die Motordrehzahl in Abhängigkeit eines vom Hydraulikregler (16) insgesamt geforderten Volumenstroms und/oder einer vom Hydraulikregler (16) insgesamt geforderten Pumpenleistung erhöht, sobald der Antriebsmotor (3) bei der aktuellen Motordrehzahl aufgrund einer Leistungsanforderung des Fahrantrieb (4) voll ausgelastet ist und bei dieser Motordrehzahl keine Leistungsreserve für den mindestens einen weiteren Leistungsverbraucher (8) und/oder die jeweils zugeordnete Hydraulikpumpe (11, 12) zur Verfügung steht, und/oder der Fahrregler (15) die Motordrehzahl in Abhängigkeit eines vom Hydraulikregler (16) insgesamt geforderten Volumenstroms und/oder einer vom Hydraulikregler (16) insgesamt geforderten Pumpenleistung senkt, sobald der Antriebsmotor (3) bei der aktuellen Motordrehzahl aufgrund einer Leistungsanforderung des Fahrantriebs (4) nur zum Teil ausgelastet ist und bei dieser Motordrehzahl eine vorgegebene Leistungsreserve für den mindestens einen weiteren Leistungsverbraucher (8) und/oder die jeweils zugeordnete Hydraulikpumpe (11, 12) zur Verfügung steht.

6. Landwirtschaftliche Arbeitsmaschine nach einem der vorhergehenden Ansprüche, **dadurch gekennzeichnet, dass** im Hydraulikregler-Modus eine durch eine Leistungsanforderung des Hydraulikreglers (16) bedingte Veränderung der Motordrehzahl im Stillstand schneller als im Fahrzustand der landwirtschaftlichen Arbeitsmaschine (1) erfolgt.

7. Landwirtschaftliche Arbeitsmaschine nach einem der vorhergehenden Ansprüche, **dadurch gekennzeichnet, dass** das Fahrerassistenzsystem (14) einen Fahrregler-Modus aufweist, in dem der Fahrregler (15) die Motordrehzahl in Abhängigkeit einer vom Fahrantrieb (4) geforderten Leistung einstellt.

8. Landwirtschaftliche Arbeitsmaschine nach einem der vorhergehenden Ansprüche, **dadurch gekennzeichnet, dass** im Fahrregler-Modus der Fahrregler (15) die Motordrehzahl in Abhängigkeit einer vom Fahrantrieb (4) geforderten Leistung erhöht, sobald die Motordrehzahl des Antriebsmotors (3) nicht ausreicht, die vom Fahrantrieb (4) geforderte Leistung zu erzeugen, und/oder der Fahrregler (15) die Motordrehzahl in Abhängigkeit einer vom Fahrantrieb (4) geforderten Leistung senkt, sobald die Motordrehzahl des Antriebsmotors (3) höher als notwendig ist, um die vom Fahrantrieb (4) geforderte Leistung zu erzeugen.

9. Landwirtschaftliche Arbeitsmaschine nach einem der vorhergehenden Ansprüche, **dadurch gekennzeichnet, dass** im Fahrregler-Modus bedienerseitig über einen Motordrehzahl-Stellhebel (17) eine Mindestmotordrehzahl einstellbar ist.

10. Landwirtschaftliche Arbeitsmaschine nach einem der vorhergehenden Ansprüche, **dadurch gekennzeichnet, dass** im Fahrregler-Modus bedienerseitig zwischen mindestens zwei gespeicherten Motordrehzahlen gewählt werden kann, wobei die jeweils gewählte Motordrehzahl von dem Fahrregler (15) durch automatische Anpassung der Getriebeübersetzung eines Getriebes (10) mit einem dem Fahrantrieb (4) zugeordneten Getriebeausgang im Wesentlichen konstant gehalten oder nicht unterschritten wird.

11. Landwirtschaftliche Arbeitsmaschine nach einem der vorhergehenden Ansprüche, **dadurch gekennzeichnet, dass** das Fahrerassistenzsystem (14) einen manuellen Modus aufweist, in dem die Motordrehzahl und/oder die Getriebeübersetzung des Getriebes (10) mit dem dem Fahrantrieb (4) zugeordneten Getriebeausgang allein bedienerseitig einstellbar ist.

12. Landwirtschaftliche Arbeitsmaschine nach einem der vorhergehenden Ansprüche, **dadurch gekennzeichnet, dass** der Hydraulikregler-Modus, der Fahrregler-Modus, der manuelle Modus und/oder mindestens ein weiterer Modus bedienerseitig und/oder automatisch systemseitig einstellbar sind.

13. Landwirtschaftliche Arbeitsmaschine nach einem der vorhergehenden Ansprüche, **dadurch gekennzeichnet, dass** das Getriebe (10) mit dem dem Fahrantrieb (4) zugeordneten Getriebeausgang ein Verteilergetriebe ist, das mindestens einen weiteren Getriebeausgang aufweist, der jeweils mindestens einer einem oder mehreren der weiteren Leistungsverbraucher (8) zugeordneten Hydraulikpumpe (11, 12) zugeordnet ist, derart, dass die vom Antriebsmotor (3) erzeugte Antriebsleistung zu einem Teil an dem Fahrantrieb (4) und zu einem weiteren Teil an die jeweilige Hydraulikpumpe (11, 12) übertragen wird.

## Claims

1. An agricultural working machine, in particular a tractor, with a drive unit (2) comprising at least one propulsion engine (3) for the production of propulsive power, with a first power consumer (5) in the form of a propulsion unit (4) and at least one further power consumer (8) in the form of a hydraulically actuatable working unit (6, 7) and/or implement (13) of the agricultural working machine (1),
wherein a driver assistance system (14) of the agricultural working machine (1) is configured to carry out an automatic regulation of the propulsive power based on both a determined required power and/or load factor of the first power consumer (5) as well as based on a determined required hydraulic power and/or a hydraulic load factor of the at least one further power consumer (8),
**characterized in that**
the driver assistance system (14) for automatic regulation of the propulsive power has a hydraulic controller (16) which is configured to adjust the pump speed of the respective hydraulic pump (11, 12) which is associated with one or more of the further power consumers (8) as a function of a performance requirement of the respective further power consumer(s) (8), wherein drive controllers (15) and hydraulic controllers (16) are configured to communicate with each other.

2. The agricultural working machine according to claim 1, **characterized in that** the driver assistance system (14) for automatic regulation of the propulsive power has a drive controller (15) which is configured to adjust the engine speed as a function of a performance requirement of the propulsion unit (4).

3. The agricultural working machine according to one of the preceding claims, **characterized in that** the driver assistance system (14) has a hydraulic control mode in which the drive controller (15) adjusts the engine speed as a function of a overall volumetric flow demanded by the hydraulic controller (16) and/or of a overall pump output demanded by the hydraulic controller (16).

4. The agricultural working machine according to one of the preceding claims, **characterized in that** in the hydraulic control mode, the drive controller (15) raises the engine speed as a function of a overall volumetric flow demanded by the hydraulic controller (16) and/or of a overall pump output demanded by the hydraulic controller (16) as soon as the pump speed of the hydraulic pump (11, 12) or at least one of the hydraulic pumps (11, 12) is not sufficient to produce the required volumetric flow of this hydraulic pump (11, 12) and/or the required pump output of this hydraulic pump (11, 12), and/or the drive controller (15) reduces the engine speed as a function of a overall volumetric flow demanded by the hydraulic controller (16) and/or of a overall pump output demanded by the hydraulic controller (16) as soon as the pump speed of the hydraulic pump (11, 12) or of at least one of the hydraulic pumps (11, 12) is higher than required for the production of the required volumetric flow of this hydraulic pump (11, 12) and/or the required pump output of this hydraulic pump (11, 12).

5. The agricultural working machine according to one of the preceding claims, **characterized in that** in the hydraulic control mode, the drive controller (15) raises the engine speed as a function of a overall volumetric flow demanded by the hydraulic controller (16) and/or of a overall pump output demanded by the hydraulic controller (16) as soon as the propulsion engine (3) is working to capacity because of a performance requirement from the propulsion unit (4) and at this engine speed, no reserves of power are available for the at least one further power consumer (8) and/or the respective associated hydraulic pump (11, 12), and/or the drive controller (15) reduces the engine speed as a function of a overall volumetric flow demanded by the hydraulic controller (16) and/or of a overall pump output demanded by the hydraulic controller (16) as soon as the propulsion engine (3) is only working to partial capacity at the current engine speed because of a performance requirement from the propulsion unit (4) and at this engine speed, a specified reserve of power is available for the at least one further power consumer (8) and/or the respective associated hydraulic pump (11, 12).

6. The agricultural working machine according to one of the preceding claims, **characterized in that** in the hydraulic control mode, a variation in the engine speed necessitated by a performance requirement of the hydraulic controller (16) is carried out more rapidly when the agricultural working machine (1) is stopped than when it is being driven.

7. The agricultural working machine according to one of the preceding claims, **characterized in that** the driver assistance system (14) has a drive controller mode in which the drive controller (15) adjusts the engine speed as a function of a performance demanded by the propulsion unit (4).

8. The agricultural working machine according to one of the preceding claims, **characterized in that** in the drive control mode, the drive controller (15) raises the engine speed as a function of a performance demanded by the propulsion unit (4) as soon as the engine speed of the propulsion engine (3) is not sufficient to produce the performance demanded by the propulsion unit (4), and/or the drive controller (15) reduces the engine speed as a function of a performance demanded by the propulsion unit (4) as soon as the engine speed of the propulsion engine (3) is higher than that which is required to produce the performance demanded by the propulsion unit (4).

9. The agricultural working machine according to one of the preceding claims, **characterized in that** a minimum engine speed can be set by the operator by means of an engine speed control lever (17) when in drive control mode.

10. The agricultural working machine according to one of the preceding claims, **characterized in that** when in drive control mode, a selection can be made by the operator between at least two stored engine speeds, wherein the drive controller (15) keeps the respective selected engine speed substantially constant or does not allow it to fall by automatic adjustment of the gear ratio of a gear (10) with a gear output associated with the propulsion unit (4).

11. The agricultural working machine according to one of the preceding claims, **characterized in that** the driver assistance system (14) has a manual mode in which the engine speed and/or the gear ratio of the gear (10) can be adjusted by the operator using the gear output associated with the propulsion unit (4) alone.

12. The agricultural working machine according to one of the preceding claims, **characterized in that** the hydraulic control mode, the drive control mode, the manual mode and/or at least one further mode can be adjusted by the operator and/or automatically by the system.

13. The agricultural working machine according to one of the preceding claims, **characterized in that** the gear (10) with the gear output associated with the propulsion unit (4) is a distribution gear which has at least one further gear output which is respectively associated with at least one hydraulic pump (11, 12) associated with one or more of the further power consumers (8) in a manner such that a portion of the propulsive power produced by the propulsion engine (3) is transmitted to the propulsion unit (4) and a further portion is transmitted to the respective hydraulic pump (11, 12).

## Revendications

1. Machine de travail agricole, en particulier tracteur, comprenant une unité d'entraînement (2) incluant au moins un moteur d'entraînement (3) pour produire une puissance d'entraînement, comprenant un premier consommateur de puissance (5) en forme de système d'avancement (4) et au moins un autre consommateur de puissance (8) en forme d'organe de travail actionnable hydrauliquement (6, 7) et/ou d'outil rapporté (13) de la machine de travail agricole (1), un système d'assistance à la conduite (14) de la machine de travail agricole (1) étant configuré pour effectuer une régulation automatique de la puissance d'entraînement aussi bien sur la base d'une puissance requise déterminée et/ou d'une charge de travail du premier consommateur de puissance (5) que sur la base d'une puissance hydraulique requise déterminée et/ou d'une charge de travail hydraulique du au moins un autre consommateur de puissance (8), **caractérisée en ce que**, pour la régulation automatique de la puissance d'entraînement, le système d'assistance à la conduite (14) comporte un régulateur hydraulique (16) qui est configuré pour établir le régime de pompe de la pompe hydraulique respective (11, 12), laquelle est associée à un ou plusieurs des autres consommateurs de puissance (8), en fonction d'un besoin en puissance du ou des autres consommateurs de puissance respectifs (8), le régulateur de marche (15) et le régulateur hydraulique (16) étant configurés pour communiquer entre eux.

2. Machine de travail agricole selon la revendication 1, **caractérisée en ce que**, pour la régulation automatique de la puissance d'entraînement, le système d'assistance à la conduite (14) comporte un régulateur de marche (15) qui est configuré pour établir le régime-moteur en fonction d'un besoin en puissance du système d'avancement (4).

3. Machine de travail agricole selon une des revendications précédentes, **caractérisée en ce que** le système d'assistance à la conduite (14) comporte un mode de régulateur hydraulique dans lequel le régulateur de marche (15) établit le régime-moteur en fonction d'un flux volumique total demandé par le régulateur hydraulique (16) et/ou d'une capacité de pompe totale demandée par le régulateur hydraulique (16) .

4. Machine de travail agricole selon une des revendications précédentes, **caractérisée en ce que**, dans le mode de régulateur hydraulique, le régulateur de marche (15) augmente le régime-moteur en fonction d'un flux volumique total demandé par le régulateur hydraulique (16) et/ou d'une capacité de pompe totale demandée par le régulateur hydraulique (16) dès que le régime de pompe de la pompe hydraulique (11, 12) ou au moins d'une des pompes hydrauliques (11, 12) ne suffit pas à produire le flux volumique demandé de cette pompe hydraulique (11, 12) et/ou la capacité de pompe demandée de cette pompe hydraulique (11, 12), et/ou le régulateur de marche (15) réduit le régime-moteur en fonction d'un flux volumique total demandé par le régulateur hydraulique (16) et/ou d'une capacité de pompe totale demandée par le régulateur hydraulique (16) dès que le régime de pompe de la pompe hydraulique (11, 12) ou au moins d'une des pompes hydrauliques (11, 12) est plus élevé que nécessaire pour produire le flux volumique demandé de cette pompe hydraulique (11, 12) et/ou la capacité de pompe demandée de cette pompe hydraulique (11, 12).

5. Machine de travail agricole selon une des revendications précédentes, **caractérisée en ce que**, dans le mode de régulateur hydraulique, le régulateur de marche (15) augmente le régime-moteur en fonction d'un flux volumique total demandé par le régulateur hydraulique (16) et/ou d'une capacité de pompe totale demandée par le régulateur hydraulique (16) dès que, au régime-moteur instantané, le moteur d'entraînement (3) est à pleine charge en raison d'un besoin en puissance du système d'avancement (4) et que, à ce régime-moteur, aucune réserve de puissance n'est disponible pour le au moins un autre consommateur de puissance (8) et/ou pour la pompe hydraulique respectivement associée (11, 12), et/ou le régulateur de marche (15) réduit le régime-moteur en fonction d'un flux volumique total demandé par le régulateur hydraulique (16) et/ou d'une capacité de pompe totale demandée par le régulateur hydraulique (16) dès que, au régime-moteur instantané, le moteur d'entraînement (3) n'est qu'à charge partielle en raison d'un besoin en puissance du système d'avancement (4) et que, à ce régime-moteur, une réserve de puissance prescrite est disponible pour le au moins un autre consommateur de puissance (8) et/ou pour la pompe hydraulique respectivement associée (11, 12).

6. Machine de travail agricole selon une des revendications précédentes, **caractérisée en ce que**, dans le mode de régulateur hydraulique, une modification du régime-moteur due à un besoin en puissance du régulateur hydraulique (16) s'effectue plus rapidement à l'arrêt qu'à l'état de marche de la machine de travail agricole (1).

7. Machine de travail agricole selon une des revendications précédentes, **caractérisée en ce que** le système d'assistance à la conduite (14) comporte un mode de régulateur de marche dans lequel le régulateur de marche (15) établit le régime-moteur en fonction d'une puissance demandée par le système d'avancement (4) .

8. Machine de travail agricole selon une des revendications précédentes, **caractérisée en ce que**, dans le mode de régulateur de marche, le régulateur de marche (15) augmente le régime-moteur en fonction d'une puissance demandée par le système d'avancement (4) dès que le régime-moteur du moteur d'entraînement (3) ne suffit pas à produire la puissance demandée par le système d'avancement (4), et/ou le régulateur de marche (15) réduit le régime-moteur en fonction d'une puissance demandée par le système d'avancement (4) dès que le régime-moteur du moteur d'entraînement (3) est plus élevé que nécessaire pour produire la puissance demandée par le système d'avancement (4).

9. Machine de travail agricole selon une des revendications précédentes, **caractérisée en ce que**, dans le mode de régulateur de marche, un régime-moteur minimal peut être établi côté utilisateur par l'intermédiaire d'un levier de réglage de régime-moteur (17).

10. Machine de travail agricole selon une des revendications précédentes, **caractérisée en ce que**, dans le mode de régulateur de marche, il est possible de choisir, côté utilisateur, entre deux régimes-moteur mémorisés, le régime-moteur respectivement choisi étant sensiblement maintenu constant ou n'étant pas soupassé par le régulateur de marche (15) par l'intermédiaire d'une adaptation automatique du rapport de transmission d'une transmission (10) comportant une sortie de transmission associée au système d'avancement (4).

11. Machine de travail agricole selon une des revendications précédentes, **caractérisée en ce que** le système d'assistance à la conduite (14) comporte un mode manuel, dans lequel le régime-moteur et/ou le rapport de transmission de la transmission (10) comprenant la sortie de transmission associée au système d'avancement (4) ne peuvent être établis que côté utilisateur.

12. Machine de travail agricole selon une des revendications précédentes, **caractérisée en ce que** le mode de régulateur hydraulique, le mode de régulateur de marche, le mode manuel et/ou au moins un autre mode peuvent être instaurés côté utilisateur et/ou automatiquement côté système.

13. Machine de travail agricole selon une des revendications, **caractérisée en ce que** la transmission (10) comportant la sortie de transmission associée au système d'avancement (4) est un boîtier de transfert qui comporte au moins une autre sortie de transmission, laquelle est associée respectivement à au moins une pompe hydraulique (11, 12) associée à un ou plusieurs des autres consommateurs de puissance (8), de façon que la puissance d'entraînement produite par le moteur d'entraînement (3) soit transférée, pour une partie, au système d'avancement (4), et pour une autre partie, à la pompe hydraulique respective (11, 12).
